# EUROPEAN PATENT SPECIFICATION

(11) **EP 1 123 077 B1**
(45) Date of publication and mention of the grant of the patent: **18.08.2004**
(21) Application number: 99946218.7
(22) Date of filing: 24.09.1999
(51) Int. Cl.: A61H 33/06

(54) **METHOD FOR CONTROLLING AN ELECTRIC SAUNA STOVE**
VERFAHREN ZUR STEUERUNG EINES ELEKTRISCHEN SAUNAOFENS
PROCEDE DE COMMANDE D'UN POELE ELECTRIQUE DE SAUNA

(30) Priority: 25.09.1998 FI 982065
(43) Date of publication of application: 16.08.2001
(73) Proprietor: Sirkjärvi, Paavo, 15610 Lahti (FI); Vallittu, Jouko, 15900 Lahti (FI)
(72) Inventor: Sirkjärvi, Paavo, 15610 Lahti (FI); Vallittu, Jouko, 15900 Lahti (FI)
(74) Representative: Tanhua, Pekka Vilhelm
(86) International application number: PCT/FI1999/000787
(87) International publication number: WO 2000/018349

(56) References cited:
- EP-A2- 0 196 562
- EP-B1- 0 203 293
- DE-A1- 3 511 436

## Description

This invention relates to a method as defined in the preamble of claim 1 for controlling an electric sauna stove.

In normal situations, electric sauna stoves are controlled in different ways depending on the type of the stove. Some stoves have two controls, which are conventional rotatable controls located in the vicinity of the lower edge of the stove. One of the controls serves to set the stove thermostat to the desired temperature and the other control serves to select the period over which the stove is switched on. If one wishes to switch off the stove before the time has run out, this is done by simply zeroing the control.

The electric stove described above provides reliable operation, however, it does not allow any other kind of control than switching on and off.

There are also conventional control devices usually located at a distance from the electric sauna stove, which, in addition to the controls above, often provide the option of switching on the sauna stove after a desired number of hours or at a specific time of the clock, i.e. they comprise a timing function.

On principle, timing is a useful function, however, it often involves setting errors. Particularly in cases where persons not familiar with the control device are in charge of the setting operation, they may hesitate whether to set the starting or ending time, and a second variable to be determined is the actual moment of effecting controls. A third function involves calculating periods from the present moment onwards so as to switch on the sauna stove at a specific moment, heating the sauna over a desired period, and perhaps switching it off at a third moment.

It is well known that the calculation of periods is not something anybody is capable of, despite efforts. As a result, the sauna stove will be switched on at the wrong time, causing unnecessary losses of energy, or the sauna will be unheated at the moment it should have been heated.

The object of this invention is to eliminate the shortcomings relating to the conventional methods for controlling electric sauna stoves as described above.

The method of the invention for controlling an electric sauna stove is defined in claim 1. The dependent claims describe preferred embodiments of the invention.

In the method of the invention for controlling an electric sauna stove, the period required for heating the sauna is used to switch on the sauna stove a rate time before the moment when the sauna should reach the desired sauna bath temperature.

The invention has the advantage of making an electric sauna stove easier to use.

The invention has the further advantage of providing enhanced energy management of electric sauna stoves.

The invention and its advantages will be described in detail below with reference to the accompanying drawing, in which
- figure 1: is a block diagram of an electric sauna stove control implementing the method of the invention
- figure 2: shows the control board of the electric sauna stove;
- figure 3: is a flow diagram of a control method of the invention;
- figure 4A: shows the coupling of the heating resistors of the electric sauna stove to the power supply mains on the time axis;
- figure 4B: shows the heating of the sauna on the time axis;
- figure 5: is a flow diagram of another control method of the invention; and
- figure 6: is a flow diagram illustrating the monitoring of the sauna heating time and the resetting of the rate time.

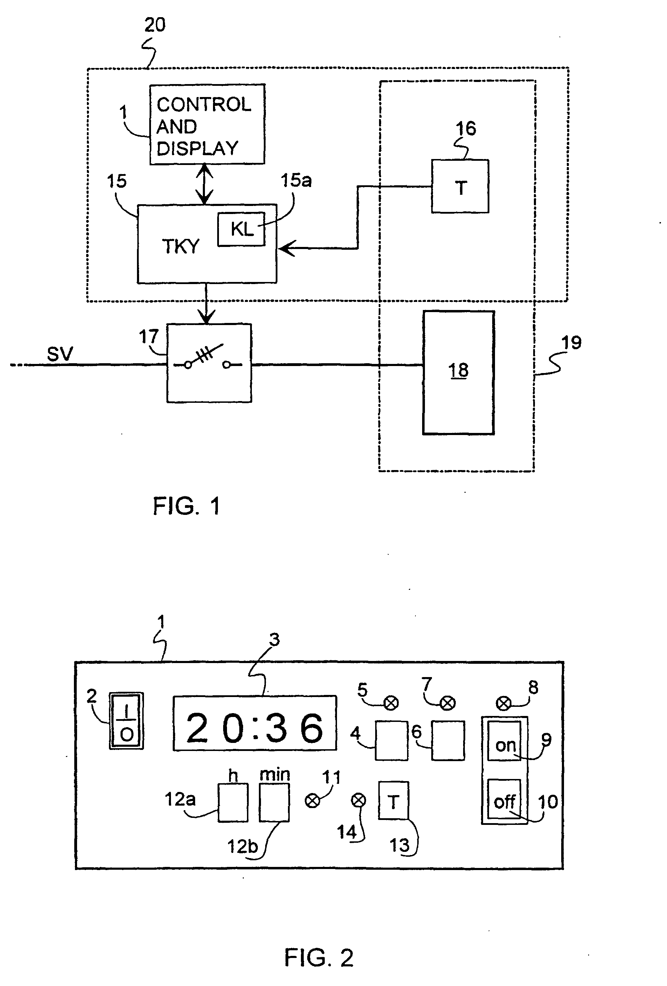

The block diagram of figure 1 shows schematically an electric sauna stove 18 implementing the control method of the invention, including the switch 17 and the control device 20. The control device 20 comprises a data processing unit 15, such as a microcontroller or similar microprocessor equipped with appropriate peripheral and connection circuits, a control board 1 and at least one temperature sensor 16. The clock 15a is disposed in connection with the data processing unit 15, being preferably integrated in a microcontroller or the like.

The control device 20 is connected to the switch 17 in order to switch on the electric sauna stove 18, i.e. connect it to a power source, preferably the power supply mains, and to switch it off accordingly. In this embodiment, the switch 17 is a power switch for connecting the electric sauna stove 18 to a threephase mains SV. The switch 17 is optionally a control switch used to control the actual power switch of the electric sauna stove. The temperature sensor 16 is disposed in the actual sauna room 19, as is, of course, the electric sauna stove 18.

The control operations are performed with the control board 1. Information about the sauna control and its state is displayed on a display 3 included in the control board, as will be explained by way of example below. The data processing unit 15 and the control board 1 are preferably integrated in the same housing, however, they may also be fitted in separate housings and mounted spaced from one another.

The control board 1 comprises a main current switch 2 and a display 3, which can be of any desired type, and a plurality of switches 4, 6, 9, 10, 12a, 12b, 13, carried out e.g. with film techniques, and a plurality of light signals 5, 7, 8, 11, 14.

The main current switch 2 and the display 3 are components known *per se*, which do not call for any explanation. The display 3 presents alphanumeric data, such as at least time of the clock and/or time in general, temperature data (at least regarding the sauna room) and messages, such as error messages. The basic value of the display 3 may be the actual time of the clock. The light switch 6 switches the sauna lights on and off. When lit, the light signal 7 indicates that the sauna lights are switched on. The main current switch 2 turns the current of the control device 20 on and off, respectively. The control device 20 (and also the sauna heating process with a predetermined time lag) are activated with the ON switch 9 and switched off with the OFF switch 10. When lit, the light signal 8 indicates that the control device 20 (and the sauna heating process) are in operation. The switches 12a and 12b set the times on the display 3, such as the target time, as explained below. The first switch 12a is an hour switch for setting hours and the second switch 12a is a minute switch for setting minutes. The light signal 11 of the hour switch indicates that the time is shown on the display 3. Switch 4 is a timer switch for setting a timing function as depicted below. The light signal 5 relates to the timing function, and by being lit it indicates that the timing function is in operation. Switch 13 is a selector switch which, in the first position of the switch, indicates the measured sauna temperature Tₛ instead of time and/or time lag in display 3, and accordingly, in the second position of the switch, it can be removed from the display. The light signal 14 indicates by being lit that the display 3 shows the sauna temperature.

It should be noted that only one preferred embodiment example of the control board 1 has been described above. All of the switches and light signals described here are not indispensable for carrying out the control method of the invention. Thus, for instance, the control board 1 may not comprise the selector switch 13 for setting the sauna temperature Tₛ and its associated light signal 14.

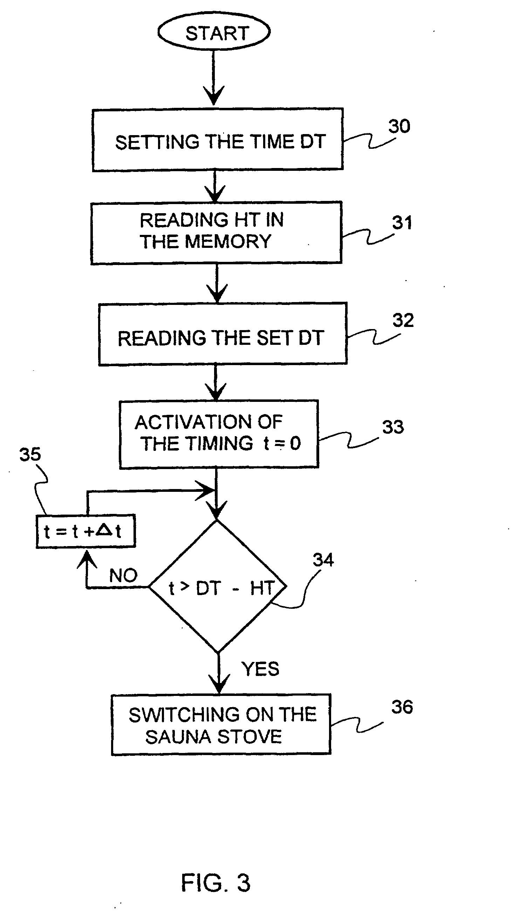

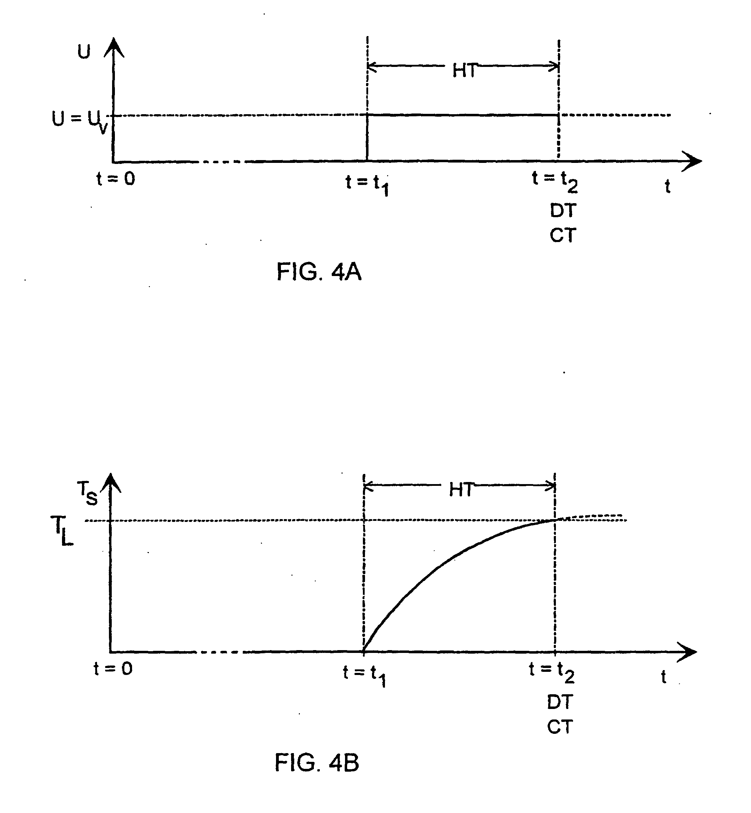

The control device 20 has the following operation applying the method of the invention. We refer to the flow diagram of figure 3 and to figures 4A and 4B. The control device 20 is equipped with a clock 15a of timer type. The setting is based on a pre-estimated sauna heating duration, i.e. the rate time HT, and in this embodiment, on timing of time lag type without actual time of the clock. The rate time HT has been stored in the memory of the data processing unit 15. In step 30, the user uses switches 12a, 12b to set the control device 20 at the target time DT (t=t₂) from the activation of the device (t=0) until the moment when the sauna should be ready for bathing. In the following step 31 the rate time HT is read in the memory of the data processing unit 15 for use by the central processing unit, and accordingly, in step 32, the target time DT is read, and in step 33 the monitoring of the time t is activated. After this, the cumulative time t is monitored at suitable intervals Δt, step 35, and is compared in step 34 with the difference DT-HT between the target time DT and the independent time HT. When the cumulative time t exceeds the difference DT-HT (t=t₁) in step 34, the switch 17 is turned off with a command from the dataprocessing unit 15 and the electric sauna stove 18 is connected to the power supply mains SV in step 36. The mains voltage U=Uᵥ is connected over the heating resistors of the electric sauna stove 18. The heating of the sauna stove 18 and the sauna room 19 starts. The temperature Tₛ of the sauna starts rising (at moment t=t₁), figure 4B. After the estimated heating period HT (t=t₂) in the target time DT the sauna room 19 is ready for bathing, in other words the sauna temperature has risen to the predetermined level T_{S}=T_{L}, as for instance 70 °C.

When the user wishes the sauna to reach the sauna bath temperature T_{L} in a given period of time, e.g. in two hours, he simply uses switches 12, 13 to set the desired time on the display, in this case e.g. 2 hours. The control device 20 anticipates the heating period HT and it serves to switch on the electric stove 18 automatically at exactly the right moment. With prior art controlling and monitoring devices, the user should know the heating duration of the sauna, subtract it from the desired time, 2 hours in this case, and set the difference as the rate time.

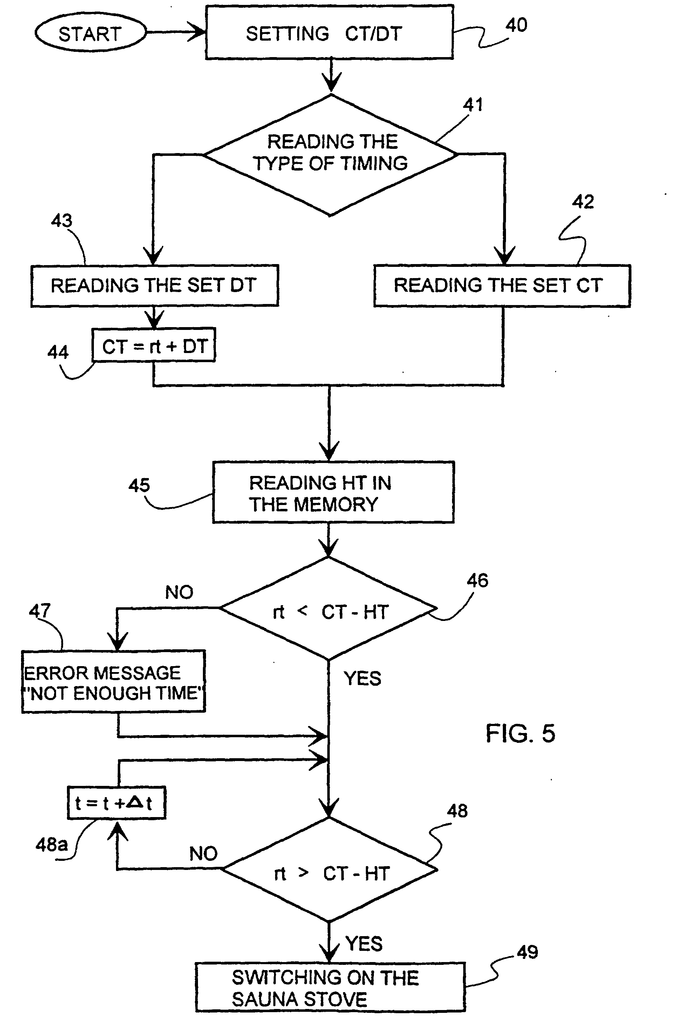

A second optional control device 20 implements a second method of the invention, operating as follows. We refer to the flow diagram of figure 5 and to figures 4A and 4B. In this embodiment, the control device 20 is equipped with a clock device 15a, which has both timer-type and real-time operation, both of these being usable alternatively. In this case, the timing is consequently of clock time or time lag type. In step 40 the target time of the clock CT or target time DT is first set as hours and minutes (t=t₂), this being the moment at which the sauna should be ready for bathing. In step 41, the type of timing is selected, i.e. either option A, a timing based on the time of the clock to be set, or option B, based on the time lag, i.e. cumulative time (cf. figure 3). In option A, the target time of the clock CT set by the user is read in step 42. In option B, the user first reads the set lag or target time DT until the moment the sauna should be ready, and then in step 44 the target time CT = rt + DT, in which rt is real time, i.e. the actual time. Both alternatives have now ended in target time CT, and after this the proceeding continues stepwise. In step 45, the sauna heating time HT stored in the memory is read in the central processing unit of the data processing unit 15. In step 46, the hypothetical sauna heating time HT is subtracted from the target time CT. If the difference CT-HT (t=t₁) is greater than the real time rt, an error message is given in step 47, and e.g. the message "NOT ENOUGH TIME" appears on the display 3, in other words, the sauna will not have enough time to be ready for bathing as soon as the user wishes. In this situation, the sauna temperature Tₛ will consequently be below the desired sauna bath temperature T_{L}. If the difference CT-HT is smaller than the real time rt, it is proceeded to step 48, where the user checks periodically whether the difference CT-HT (t=t₁) exceeds the real time rt during step 48a after small time additions Δt. When this has been confirmed to be the case in step 49, the stove of the electric sauna 18 is switched on with switch 17 and the heating of the sauna room 19 starts. After the estimated heating time HT, the sauna 19 gets ready for bathing in the target time CT (t=t₂).

The control process described above can be visualised for instance as follows. When a person sets out on a jogging tour e.g. at 3.30 p.m. and wishes the sauna to be ready for bathing as he returns, i.e. to have reached a sufficiently high temperature T_{S}, the set target value T_{L}, such as for instance 70 (or 80) °C, he simply presses the timer switch 4, and then the light signal 5 indicates that the timing function has been switched on. He then adjusts switches 12a and 12b to show on the display the moment, e.g. 4.45 p.m., when he intends to take a sauna bath, instead of the time for switching on the sauna stove as is conventionally done. The set time starts blinking on the display 3. The control device 20 implementing the method of the invention anticipates the heating time HT and switches on the electric sauna stove 18 automatically at exactly the right moment t=t₁ for the sauna to be ready at the desired moment CT (DT), i.r. t=t₂.

The time determination described above does not involve any risk of mistakes. Anybody is capable of simply setting the moment he wishes to take a sauna bath, and there will be no mistakes. On the other hand, the control device 20 includes provisions for checking the temperature of the sauna at that particular moment by means of the display 3.

The control device 20 advantageously also comprises an alarm feature in the event that the user sets too early a moment for starting the sauna bath, with the result that the estimated heating time HT will be too short for heating the sauna to the target temperature T_{L} before the desired moment, resulting in a temperature lower than this. This is illustrated as step 47 in the flow diagram of figure 4.

If necessary, the control device of the method can be equipped with a daily, weekly or other similar clock function for periodic heating, thus substantially facilitating the programming, since the actual times for taking a sauna bath can be used instead of the times for switching on the sauna stove.

The control device 20 can obviously be installed either in connection with an electric sauna stove or at some other location in or outside the sauna.

It is also obvious that the control device 20 can be connected to telephone, mobile phone and other telecommunication networks, allowing telecontrol.

In addition to the straightforward setting described above, the basic idea of the invention is that the function of the control device 20 is based on the rate time HT describing the time required for heating the sauna, the rate time being used to switch on the sauna stove at exactly the right moment for the sauna to be fully heated at the desired moment.

The rate time HT required for heating the sauna can be readjusted and altered. The rate time HT can be determined for instance by measuring with the control device 20 during each heating cycle (or at desired intervals) the time required from the moment the heating of the electric sauna stove is started until the set sauna temperature T_{L} (or any set reference temperature) is reached. The heating rate time HT can be the time calculated or inferred from measurements made during one or more previous heating cycles (n heating cycles) or a time separately assigned to the control device 20.

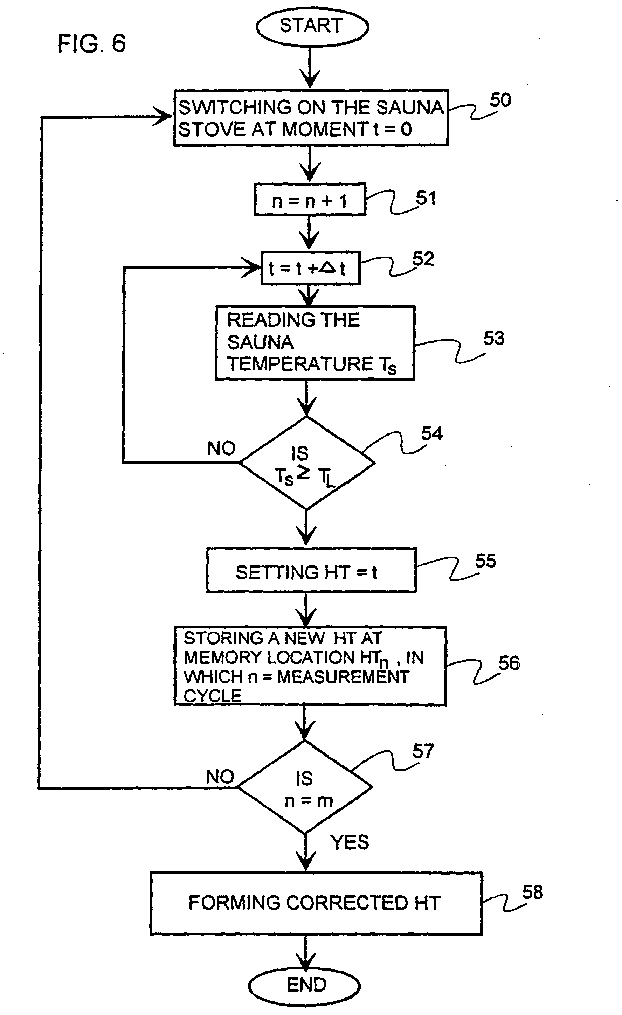

Figure 6 is a schematic view of a flow diagram of a method of readjusting and altering the rate time HT. When the sauna is switched on, i.e. the electric sauna stove 18 is connected to the power supply mains SV in step 50, the heating cycle counter is set as n=1 (initial value n = 0) for the first time in step 51, and the measurement of the time t is started in step 52. Subsequently, in step 53, the heating of the sauna, i.e. the sauna temperature Tₛ is monitored on the basis of messages received from the temperature sensor 16. The temperature sensor 16 is read at suitable intervals Δt, such as 1 minute, step 53, and the measured temperature Tₛ is compared with the preset target temperature T_{L}, step 54. When the measured sauna temperature Tₛ has reached the set sauna bath temperature Tₛ, the measuring of the time t is interrupted and this time is stored in the memory as the sauna heating duration HT in step 55. Identical measurements are performed during several sauna heating cycles, yielding a plurality of heating time values HT₁, HT₂, HT₃,...HTₙ, which are stored in the memory, step 56. n = the integral describing the number of heating cycles and m is the set number of heating cycles on which the definitive rate time HT is estimated, step 57. On the basis of these heating time measurements, a new corrected rate i.e. heating time HT is formed e.g. as a mean value, and this time is stored in the memory and used as the sauna heating rate time HT until the next readjustment.

If the heating time is continuously monitored, any changes in the heating system can be automatically taken into account in the determination of the rate time HT. Such changes are for instance a gradual decrease in the power of the sauna stove caused by wear or clogging of the sauna stove stones, or seasonal heating variations.

If desired, the estimated heating time HT can be corrected and adjusted taking account of the initial sauna temperature and possibly also the outdoor temperature. If necessary, these allow necessary rate time changes to be calculated or concluded from general physical models. These principles may also be followed in order to allow for any changes in the set sauna temperature.

As shown above, the method of the invention always ensures an optimal final situation without energy loss. This is easily achieved for instance by pressing the control timing button and by setting the moment for starting the sauna bath or the time until the moment the sauna bath will start.

The control device for implementing the method of the invention can, of course, be used to control other variables than merely the moment for starting the heating. Such other controlled variables are the final sauna temperature and the maximum period over which the sauna stove is switched on in the event that the user is unable to switch off the sauna stove or forgets to do so. If desired, e.g. the sauna temperature can be indicated on the display. There may be several displays or no display at all. The display can be used in several ways, which are not in any way restricted by current techniques.

The data processing unit 15 may comprise a system based on a microprocessor, as schematically described above, however, the control operations can also be carried out using e.g. off-line logical circuits and/or electromechanical components.

The invention has been described above with reference to the accompanying conceptual figure of the control device developed for implementing the method of the invention, without being by any means confined to this, however. The device may optionally have another aspect and it may comprise additional functions or some of the functions of the described device may be absent.

The invention can be modified in a number of ways without departing from the inventive idea as long as it remains within the scope defined by the accompanying claims.

## Claims

1. A method for controlling an electric sauna stove, in which method the time required for heating the sauna is used to switch on the electric sauna stove a rate time (HT) before the moment (DT; CT) when the sauna should have reached the desired sauna bath temperature (T_{L}), **characterised in that** the actual sauna heating time is monitored and measured during different heating cycles in order to allow for varying heating conditions or any other events, and that a new rate time (HT) is set on the basis of the determined heating cycles.

2. A method as defined in claim 1, **characterised in that** the determination of the rate time (HT) takes account of the initial sauna temperature and the outdoor temperature .

3. A method as defined in claim 1 or 2, **characterised in that** the sauna bath temperature (T_{L}) can be preset.

4. A method as defined in any of the preceding claims, **characterised in that** period over which the electric sauna stove (18) is switched on can be preset.

## Patentansprüche

1. Ein Verfahren zum Kontrollieren eines elektrischen Saunaofens, bei welchem Verfahren die benötigte Zeit zum Aufheizen der Sauna verwendet wird, um den elektrischen Saunaofen eine Vorhaltezeit (HT) vor dem Moment (DT; CT), zu dem die Sauna die gewünschte Saunabadtemperatur (T_{L}) erreicht haben soll, anzuschalten, **dadurch gekennzeichnet, dass** die aktuelle Saunaheizzeit überwacht und während verschiedener Heizzyklen gemessen wird, um ein Variieren von Heizkonditionen oder irgendwelcher anderer Maßnahmen zu ermöglichen und, dass eine neue Vorhaltezeit (HT) auf der Basis der bestimmten Heizzyklen festgesetzt wird.

2. Ein Verfahren gemäß Anspruch 1, **dadurch gekennzeichnet, dass** die Bestimmung der Vorhaltezeit (HT) unter Berücksichtigung der Eingangssaunatemperatur und der Außentemperatur erfolgt.

3. Ein Verfahren gemäß Anspruch 1 oder 2, **dadurch gekennzeichnet, dass** die Saunabadtemperatur (T_{L}) voreingestellt werden kann.

4. Ein Verfahren gemäß einem der vorstehenden Ansprüche, **dadurch gekennzeichnet, dass** die Periode, während welcher der elektrische Saunaofen (18) angeschaltet wird, voreingestellt werden kann.

## Revendications

1. Un procédé de commande d'un poêle électrique de sauna, dans lequel le temps nécessaire pour chauffer le sauna est utilisé pour alimenter le poêle électrique de sauna pendant une durée nominale (HT) avant le moment (DT; CT) où le sauna devrait avoir atteint la température souhaitée de bain de sauna (TL), **caractérisé en ce que** la durée réelle de chauffage du sauna est surveillée et mesurée durant différents cycles de chauffage afin de permettre de faire varier les conditions de chauffage ou de quelconques autres événements, et **en ce qu'**une nouvelle durée nominale (HT) est fixée sur la base des cycles de chauffage déterminés.

2. Un procédé selon la revendication 1, **caractérisé en ce que** la détermination de la durée nominale (HT) tient compte de la température initiale de sauna et de la température extérieure.

3. Un procédé selon la revendication 1 ou 2, **caractérisé en ce que** la température de bain de sauna (T_{L}) peut être préréglée.

4. Un procédé selon l'une quelconque des revendications précédentes, **caractérisé en ce que** la période durant laquelle le poêle (18) de sauna électrique est alimenté peut être préréglée.
